# EUROPEAN PATENT SPECIFICATION

(11) **EP 2 877 774 B1**
(45) Date of publication and mention of the grant of the patent: **15.05.2024**
(21) Application number: 13721066.2
(22) Date of filing: 13.03.2013
(51) Int. Cl.: F17C 13/08, B64D 41/00, F16L 1/00

(54) **REMOVABLE STORAGE FOR HYDROGEN ON-BOARD AN AIRCRAFT**
ENTFERNBARER SPEICHER FÜR WASSERSTOFF AN BORD EINES FLUGZEUGES
DISPOSITIF DE STOCKAGE DÉTACHABLE POUR HYDROGÈNE EMBARQUÉ SUR UN AÉRONEF

(30) Priority: 26.07.2012 US 201261675915 P
(43) Date of publication of application: 03.06.2015
(73) Proprietor: SAFRAN AEROTECHNICS, 78370 Plaisir (FR)
(72) Inventor: BRUNAUX, Yannick, F-78210 Saint Cyr L'Ecole (FR); GILLOTIN, Vincent, F-91430 Vauhallan (FR); CERISIER, Jerome, F-92190 Meudon (FR)
(74) Representative: Gevers & Orès
(86) International application number: PCT/IB2013/051984
(87) International publication number: WO 2014/016708

(56) References cited:
- WO-A1-03/091620
- WO-A1-03/091620
- WO-A1-03/091620
- DE-A1-102007 054 291
- DE-A1-102007 054 291
- FR-A1- 2 946 955
- FR-A1- 2 946 955
- US-A1- 2003 230 671
- US-A1- 2003 230 671
- US-A1- 2004 023 087
- US-A1- 2004 023 087
- US-A1- 2005 224 514
- US-A1- 2005 224 514
- US-A1- 2009 272 590
- US-A1- 2009 272 590

## Description

### FIELD OF THE INVENTION

Embodiments of the present invention relate generally to removable storage for hydrogen networks on-board an aircraft. They are particularly related to aircraft that use a hydrogen network in order to support a fuel cell system.

### BACKGROUND

A number of components on-board an aircraft require electrical power for their activation. Many of these components are separate from the electrical components that are actually required to run the aircraft (i.e., the navigation system, fuel gauges, flight controls, and hydraulic systems). For example, aircraft also have catering equipment, heating/cooling systems, lavatories, power seats, water heaters, and other components that require power as well. Specific components that may require external power include but are not limited to trash compactors (in galley and/or lavatory), ovens and warming compartments (e.g., steam ovens, convection ovens, bun warmers), optional dish washer, freezer, refrigerator, coffee and espresso makers, water heaters (for tea), air chillers and chilled compartments, galley waste disposal, heated or cooled bar carts/trolleys, surface cleaning, area heaters, cabin ventilation, independent ventilation, area or spot lights (e.g., cabin lights and/or reading lights for passenger seats), water supply, water line heating to prevent freezing, charging stations for passenger electronics, electrical sockets, vacuum generators, vacuum toilet assemblies, grey water interface valves, power seats (e.g., especially for business or first class seats), passenger entertainment units, emergency lighting, and combinations thereof. These components are important for passenger comfort and satisfaction, and many components are absolute necessities.

However, one concern with these components is their energy consumption. As discussed, galley systems for heating and cooling are among several other systems aboard the craft which simultaneously require power. Frequently, such systems require more power than can be drawn from the aircraft engines' drive generators, necessitating additional power sources, such as a kerosene-burning auxiliary power unit (APU) (or by a ground power unit if the aircraft is not yet in flight). This power consumption can be rather large, particularly for long flights with hundreds of passengers. Additionally, use of aircraft power produces noise and CO₂ emissions, both of which are desirably reduced. Accordingly, it is desirable to identify ways to improve fuel efficiency and power management by providing innovative ways to power these components. There are new ways being developed to generate power to run on-board components, as well as to harness beneficial by-products of that power generation for other uses on-board passenger transport aircraft.

The relatively new technology of fuel cells provides a promising cleaner and quieter means to supplement energy sources already aboard aircrafts. A fuel cell has several outputs in addition to electrical power, and these other outputs often are not utilized, but can be used to avoid loss of other usable energy sources (such as thermal, electric and/or pneumatic power) generated by the fuel cell system. Fuel cell systems combine a fuel source of compressed hydrogen with oxygen in the air to produce electrical and thermal power as a main product. Water and Oxygen Depleted Air (ODA) are produced as by-products, which are far less harmful than CO₂ emissions from current aircraft power generation processes. Such fuel cell systems on-board aircraft are, for example, described in US 2003/230671 A1 or DE 10 2007 054291 A1.

US2009/0272590 discloses a hydrogen storage system for a vehicle, comprising a hydrogen storage cartridge which is readily attachable to and detachable from the vehicle using a quick connector.

Because the proposed use of fuel cell systems on-board aircraft is relatively new, there are not appropriate storage networks and systems in place for the hydrogen that is required for fuel cell functioning. Specifically, there are currently no hydrogen networks installed on a commercial aircraft. Oxygen networks are installed in case of emergency aircraft depressurization, such that oxygen can be provided for crew and passengers. To avoid high oxygen leakage, an automatic flow fuse can be installed along the gas network. High pressure is avoided out of the cylinder area, and low pressure is preferred for safety reasons. There are also often provided chemical oxygen generators on-board an aircraft. However, these systems and networks are not designed to be removable, nor are they designed for delivering gas to a fuel cell system, but for delivering oxygen to breathing systems and other pressurized systems.

WO03/091620 (Air Liquide) relates to a station for supplying fuel, typically fuel gas, to a vehicle equipped with an interchangeable fuel refill (4), and an engine capable of producing propelling power to the vehicle from the fuel contained in said refill. Said station comprises automatic means for charging, in the vehicle, a fuel refill pre-filled with fuel gas.

Accordingly, there is a current need for a removable hydrogen storage system that can be removed and refilled and/or exchanged.

### BRIEF SUMMARY

Embodiments of the invention defined in the claims and described herein thus provide hydrogen storage for an aircraft network that is used for fuel cell application and/or any other hydrogen application. The hydrogen storage solutions are designed to be removable from the aircraft, such that they can be refilled and/or exchanged for a new source of hydrogen.

### BRIEF DESCRIPTION OF THE DRAWINGS

FIG. 1 shows a side plan view of a hydrogen storage trolley.
FIG. 2 shows a side plan view of a hydrogen storage cradle.
FIG. 3 shows a side perspective view of a hydrogen storage air cargo container.
FIG. 4 shows a schematic of a potential hydrogen aircraft network.

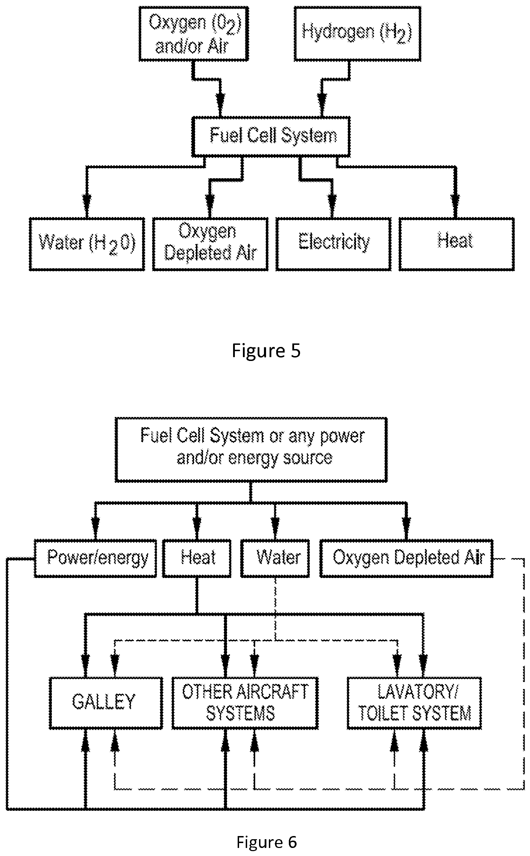

FIG. 5 illustrates a schematic of a fuel cell system that uses hydrogen.
FIG. 6 illustrates a schematic of how a fuel cell system may be used to power various aircraft systems.
FIG. 7 illustrates one embodiment of a cylindrical quick fit connector that may be used to connect the hydrogen to one or more aircraft systems.
FIG. 8 illustrates one embodiment of a quick fit connector (plate) that may be used to connect the hydrogen to one or more aircraft systems.

### DETAILED DESCRIPTION

Embodiments of the present invention provide devices, systems, and methods for providing removable hydrogen storage in an aircraft. The systems are designed to be easily removable from the aircraft and replaced with a new set of hydrogen tanks. Airlines seek more and more to reduce turn-around time of the aircraft, but it is also imperative for solutions to be safe to install, as well as safe and easy maintain. It desirable that the embodiments described herein be quick to fit and remove from the aircraft, so that the hydrogen filling can take place off-site or in another dedicated safe filling area. This means that there will not be increased aircraft turn-around time or additional safety precautions or consideration to implement for hydrogen filling purposes. The solutions described are thus intrinsically safe and easily available, while also being easy to integrate, reducing logistics. The various embodiments described herein may be used individually or in conjunction with one another and other commercial solutions. There may be provided one or more hydrogen storage locations. It should also be understood that although the systems are described with respect to use of hydrogen for the fuel cell systems, the removable hydrogen storage described is not dedicated to a specific application and the concept of decentralized storage of this type of fuel (or other types of fuel) may be used to power other aircraft applications.

Hydrogen gas networks compare to oxygen gas networks in that they both require establishment of safety regulations and standards. Any gas cylinder installed onboard an aircraft must be qualified, certified, and obtain DOT approval. The guideline SAE AIR6464 provides recommendations for aircraft fuel cell system integration.

Gas storage used for hydrogen is a typical gas cylinder, having a pressure ranging from about 127 bar to about 700 bar or more. There are different types of gas cylinders, such as Type 1 (metal), Type 2 (Hoop wrapped composite with metal line), Type 3 (Fully wrapped composite with a metal liner), and Type 4 (Fully wrapped composite with no metal liner). The embodiments described herein are useful for all types of cylinders, as well as other storage containers that may be used in the future. It is generally desirable that any storage solution provided for use of hydrogen on-board a passenger transport aircraft is designed to be safe and secure. Accordingly, the following removable hydrogen storage network systems have been developed.

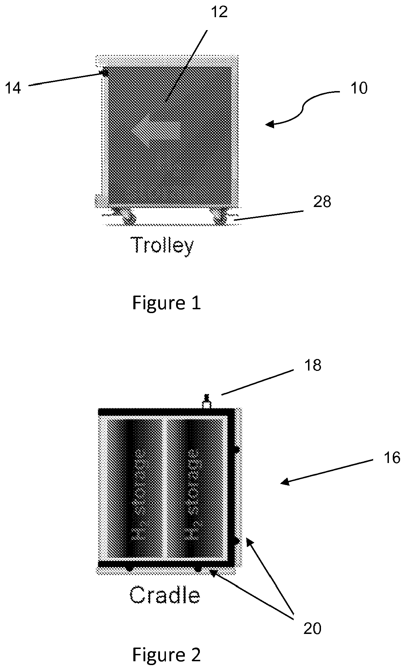

Figure 1 illustrates a hydrogen storage trolley 10. This trolley 10 is similar to the type of trolley that is normally used for food and/or drink storage and catering on-board an aircraft. In this case, the trolley bay is replaced by a hydrogen storage area 12, which can house one or more cylinders or any other type of storage. A quick plug 14 can be used for hydrogen connection.

As shown in Figure 2, storage may be formed as a cradle 16. Cradle may be plugged to the hydrogen network via a quick fit connection 18 that may be integrated into the cradle 16 for a low standard exchange time. The cradle may be installed in a pressurized or unpressurized area. The cradle has sides and a base, and may have an optional lid/top provided as well. It may be designed in function based on the number of hydrogen cylinders to be housed or based on varying sizes and/or shapes of the hydrogen cylinders. The cradle has a locking strap which can be quickly set to secure the cylinders in place. Other available options for securing the cradle include but are not limited to a locking side rail 20, a docking point, a fixed locking point (such as a classic screw securement), or a quick fit docking feature. These features may also be used with any of the embodiments described herein. The cradle can be removed with standard tooling.

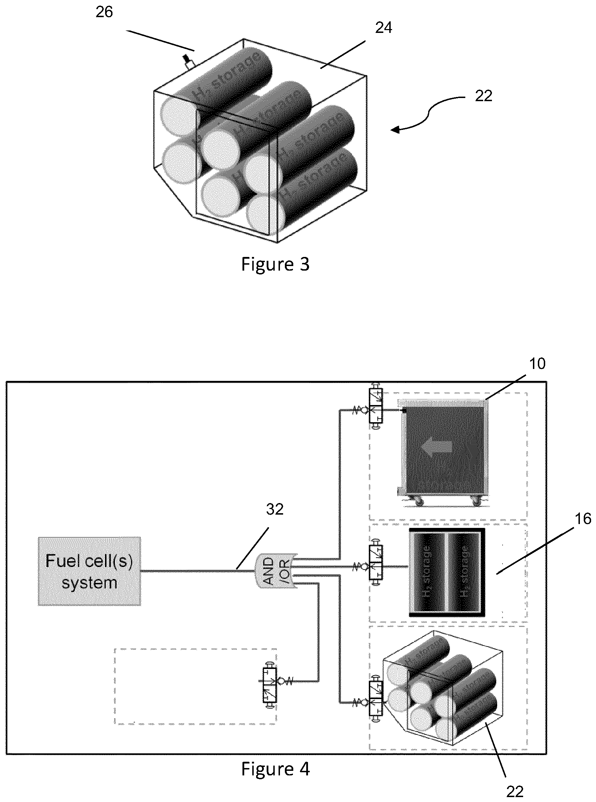

Figure 3 illustrates an air cargo container 22 embedded with a hydrogen storage area 24. The storage area may be plugged to the hydrogen network via connection port 26. This embodiment may be able to contain a higher quantity of hydrogen than a trolley or cradle. These options may be used individually or in connection with one another. They are all designed to generally be removable from the aircraft so that the hydrogen cylinders can be removed and refilled at a location remote from the aircraft. Accordingly, these options may be provided with wheels or other movable features, such as the wheels 28 shown on trolley 10, or sliders, or gliders. Alternatively, they may be small enough to be lifted and removed via hand or via a small forklift. In general, a cargo container can be removed and replaced with standard airport handling material, and they have larger storage than some other options. A cargo container is fixed on a slide rail, then is locked with integrated aircraft brackets.

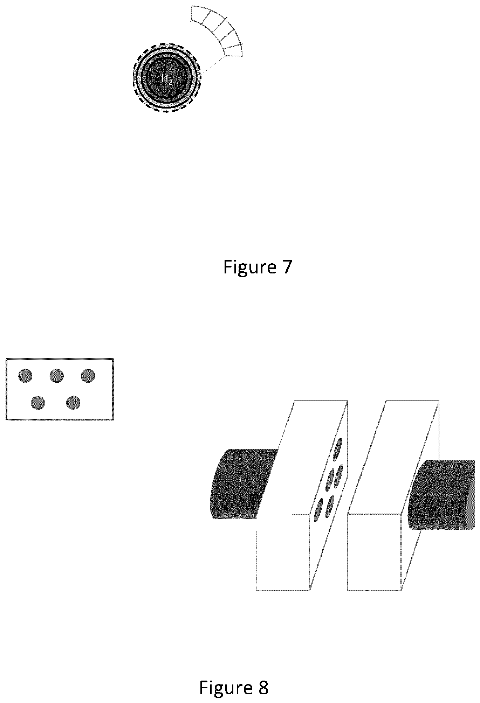

The quick fit plug 14 for the hydrogen storage system may be used on any of these embodiments in order to connect the hydrogen cylinders to the hydrogen network. The plug 14 may integrate a communication cable for A/C communication, or it may use a remote ON/OFF valve. The other connectors 18, 26 may have a quick keyed fit or they may include different sizes in order to avoid unintentional coupling to other components. It may be possible to provide an all-in-one connector or to provide separate connectors that are specific to the hydrogen storage system. Figure 7 shows one embodiment of a cylindrical quick fit connector, which has an optical lens to keep an optic signal away, even if the connector turns around on itself. Figure 8 shows one embodiment of a quick fit connector plate, which cannot turn around on itself and which includes a locking function. Other connectors are possible and considered within the scope of this invention. It should also be understood that any connector may be used on any of the storage solutions described herein.

In order to start and/or shut off the delivery of hydrogen, manual or remote shut off valves can be installed inside the trolley, cradle, and/or cargo container systems. The system could be closed automatically if one or more of the valves of the trolley, cradle, or cargo container is unintentionally disconnected.

Figure 4 illustrates a schematic for a hydrogen aircraft network. One or more fuel cell system(s) 30 and/or any other hydrogen application are connected to the hydrogen aircraft network. The network them has conduits 32 that lead to the various storage options 10, 16, and/or 22. These hydrogen storage options can be located in pressurized and/or unpressurized areas of the aircraft. Hydrogen can be stored in gaseous, liquid and/or solid state.

Each storage method can have a quick fit and remove solution, which can be implemented on all types of aircraft and/or can have an intrinsic safety. For example, it is desirable to avoid a permanent H₂ detection, an integrated regulator, and high pressure pipes. Instead, a standalone system is desired for safety purposes. The shut off valve may be manual, remote, or it may be a standalone shut off valve. As discussed above, the may be a quick keyed fit or it may have a different size from quick key fit connector in order to avoid unintentional coupling.

## Claims

1. An aircraft hydrogen storage network system for delivering hydrogen to a fuel cell system on-board an aircraft, comprising:
one or more hydrogen storage features (10,16,22) configured to be removable from the aircraft hydrogen storage network system and containing one or more hydrogen cylinders or other hydrogen containers, which store hydrogen in gaseous, liquid or solid state;
a hydrogen network configured to be on-board the aircraft, which includes conduits leading from at least one system requiring hydrogen to the one or more hydrogen storage features, one of the systems requiring hydrogen being a fuel cell system; and
a connection feature (14, 18, 26) being a quick fit connector on the one or more hydrogen storage features allowing the hydrogen to be delivered through the conduits to the at least one system requiring hydrogen on-board the aircraft,
**characterised in that**
the hydrogen storage features (10,16,22) comprise a trolley (10).

2. The aircraft hydrogen storage network system of claim 1, wherein the hydrogen storage features (10,16,22) further comprise a cradle (16), or a cargo container (22).

3. The hydrogen storage network system of claim 2, wherein the trolley (10), the cradle (16) or the cargo container (22) comprise manual or remote shut off valves.

4. The aircraft hydrogen storage network system of claim 1, wherein the connection feature (14, 18, 26) comprises a cylindrical quick fit connector or a plate quick fit connector.

5. The hydrogen storage network system of claim 4, wherein the connection feature is a cylindrical quick fit connector which turns around on itself and has an optical lens to keep an optic signal away, even if the cylindrical quick fit connector turns around on itself.

6. The hydrogen storage network system of claim 4, wherein the connection feature is a plate quick fit connector which does not turns around on itself and has a locking function.

7. The aircraft hydrogen storage network system of any of the preceding claims, wherein the hydrogen storage feature (10,16,22) that is removable from the aircraft has a locking system that secures the feature in the aircraft in use.

8. The aircraft hydrogen storage network system of claim 7, wherein the locking system comprises a locking strap, a slide rail (20), a docking point, a screw securement, or a quick fit docking feature.

9. The aircraft hydrogen storage network system of any of the preceding claims, wherein the connection feature (14, 18, 26), which connects the hydrogen storage feature (10,16,22) to the hydrogen network on-board the aircraft is a quick fit plug having a communication cable for A/C communication or a remote ON/OFF valve.

## Patentansprüche

1. Flugzeug-Wasserstoffspeichernetzsystem zum Liefern von Wasserstoff an ein Brennstoffzellensystem an Bord eines Flugzeugs, umfassend:
eine oder mehrere Wasserstoffspeichermerkmale (10, 16, 22), welche so konfiguriert sind, dass sie aus dem Flugzeug-Wasserstoffspeichernetzsystem entfernbar sind und eine oder mehrere Wasserstoffzylinder oder andere Wasserstoffbehälter enthalten, welche Wasserstoff in gasförmigem, flüssigem oder festem Zustand speichern;
ein Wasserstoffnetz, welches so konfiguriert ist, dass es sich an Bord des Flugzeugs befindet und Leitungen beinhaltet, welche von zumindest einem System, welches Wasserstoff benötigt, zu dem einen oder den mehreren Wasserstoffspeichermerkmalen führen, wobei eines der Systeme, welches Wasserstoff benötigt, ein Brennstoffzellensystem ist; und
ein Verbindungsmerkmal (14, 18, 26), bei welchem es sich um einen Schnellverbinder an dem einen oder den mehreren Wasserstoffspeichermerkmalen handelt, welche die Lieferung des Wasserstoffs über die Leitungen an das zumindest eine System, welches Wasserstoff benötigt, an Bord des Flugzeugs ermöglicht,
**dadurch gekennzeichnet, dass**
die Wasserstoffspeichermerkmale (10, 16, 22) einen Wagen (10) umfassen.

2. Flugzeug-Wasserstoffspeichernetzsystem nach Anspruch 1, wobei die Wasserstoffspeichermerkmale (10, 16, 22) weiter eine Halterung (16) oder einen Frachtcontainer (22) umfassen.

3. Wasserstoffspeichernetzsystem nach Anspruch 2, wobei der Wagen (10), die Halterung (16) oder der Frachtcontainer (22) manuelle oder ferngesteuerte Absperrventile umfassen.

4. Flugzeug-Wasserstoffspeichernetzsystem nach Anspruch 1, wobei das Verbindungsmerkmal (14, 18, 26) einen zylindrischen Schnellverbinder oder einen Plattenschnellverbinder umfasst.

5. Wasserstoffspeichernetzsystem nach Anspruch 4, wobei das Verbindungsmerkmal ein zylindrischer Schnellverbinder ist, welcher sich um sich selbst dreht und eine optische Linse aufweist, um ein optisches Signal fernzuhalten, selbst wenn sich der zylindrische Schnellverbinder um sich selbst dreht.

6. Wasserstoffspeichernetzsystem nach Anspruch 4, wobei das Verbindungsmerkmal ein Plattenschnellverbinder ist, der sich nicht um sich selbst dreht und eine Verriegelungsfunktion aufweist.

7. Flugzeug-Wasserstoffspeichernetzsystem nach einem der vorstehenden Ansprüche, wobei das Wasserstoffspeichermerkmal (10, 16, 22), welches aus dem Flugzeug entfernbar ist, ein Verriegelungssystem aufweist, welches die Funktion im Flugzeug bei Verwendung sichert.

8. Flugzeug-Wasserstoffspeichernetzsystem nach Anspruch 7, wobei das Verriegelungssystem einen Verriegelungsgurt, eine Gleitschiene (20), einen Andockpunkt, eine Schraubensicherung oder ein Schnellverbinder-Andockmerkmal umfasst.

9. Flugzeug-Wasserstoffspeichernetzsystem nach einem der vorstehenden Ansprüche, wobei das Verbindungsmerkmal (14, 18, 26), welches das Wasserstoffspeichermerkmal (10, 16, 22) mit dem Wasserstoffnetz an Bord des Flugzeugs verbindet, ein Schnellsteckverbinder ist, welcher ein Kommunikationskabel für A/C-Kommunikation oder ein ferngesteuertes EIN/AUS Ventil aufweist.

## Revendications

1. Système de réseau de stockage d'hydrogène d'aéronef pour fournir de l'hydrogène à un système de pile à combustible à bord d'un aéronef, comprenant :
un ou plusieurs éléments de stockage d'hydrogène (10, 16, 22) configurés pour être retirés du système de réseau de stockage d'hydrogène d'aéronef et contenant une ou plusieurs bouteilles d'hydrogène ou d'autres récipients d'hydrogène, qui stockent l'hydrogène à l'état gazeux, liquide ou solide ;
un réseau d'hydrogène configuré pour être à bord de l'aéronef, qui comprend des conduits allant d'au moins un système nécessitant de l'hydrogène audit ou auxdits éléments de stockage d'hydrogène, un des systèmes nécessitant de l'hydrogène étant un système de pile à combustible ; et
un élément de connexion (14, 18, 26), qui est un raccord à montage rapide sur le ou les éléments de stockage d'hydrogène, permettant à l'hydrogène d'être acheminé par les conduits vers ledit au moins un système nécessitant de l'hydrogène à bord de l'aéronef,
**caractérisé en ce que**
les éléments de stockage d'hydrogène (10, 16, 22) comprennent un chariot (10).

2. Système de réseau de stockage d'hydrogène d'aéronef de la revendication 1, dans lequel les éléments de stockage d'hydrogène (10, 16, 22) comprennent en outre un berceau (16) ou un récipient de cargaison (22).

3. Système de réseau de stockage d'hydrogène de la revendication 2, dans lequel le chariot (10), le berceau (16) ou le récipient de cargaison (22) comprennent des vannes d'arrêt manuelles ou à distance.

4. Système de réseau de stockage d'hydrogène d'aéronef de la revendication 1, dans lequel l'élément de connexion (14, 18, 26) comprend un raccord à montage rapide cylindrique ou un raccord à montage rapide à plaque.

5. Système de réseau de stockage d'hydrogène de la revendication 4, dans lequel l'élément de connexion est un raccord à montage rapide cylindrique qui tourne sur lui-même et possède une lentille optique pour éloigner un signal optique, même si le raccord à montage rapide cylindrique tourne sur lui-même.

6. Système de réseau de stockage d'hydrogène de la revendication 4, dans lequel l'élément de connexion est un raccord à montage rapide à plaque qui ne tourne pas sur lui-même et qui a une fonction de verrouillage.

7. Système de réseau de stockage d'hydrogène d'aéronef de l'une quelconque des revendications précédentes, dans lequel l'élément de stockage d'hydrogène (10, 16, 22) amovible de l'aéronef est doté d'un système de verrouillage qui fixe l'élément dans l'aéronef en cours d'utilisation.

8. Système de réseau de stockage d'hydrogène d'aéronef de la revendication 7, dans lequel le système de verrouillage comprend une sangle de verrouillage, une glissière (20), un point d'ancrage, une fixation par vis ou un élément d'ancrage à montage rapide.

9. Système de réseau de stockage d'hydrogène d'aéronef de l'une quelconque des revendications précédentes, dans lequel l'élément de connexion (14, 18, 26), qui relie l'élément de stockage d'hydrogène (10, 16, 22) au réseau d'hydrogène à bord de l'aéronef, est une prise à montage rapide dotée d'un câble de communication pour la communication A/C ou d'une vanne ON/OFF à distance.
